Europäisches Patentamt

European Patent Office

Office européen des brevets

(11) Publication number: **0 063 202**
**A1**

## (12) EUROPEAN PATENT APPLICATION

(21) Application number: **81830175.6**

(22) Date of filing: **29.09.81**

(51) Int. Cl.³: **B 01 D 46/24**
**B 01 D 27/00**

(30) Priority: **13.04.81 IT 2111881**

(43) Date of publication of application:
**27.10.82 Bulletin 82/43**

(84) Designated Contracting States:
**CH DE FR GB LI SE**

(71) Applicant: **Bea, Aldo**
**Via Mac Mahon, 50**
**I-20100 Milano(IT)**

(72) Inventor: **Bea, Aldo**
**Via Mac Mahon, 50**
**I-20100 Milano(IT)**

(74) Representative: **Cicogna, Franco**
**Ufficio Internazionale Brevetti Dott.Prof. Franco Cicogna**
**Via Visconti di Modrone, 14/A**
**I-20122 - Milano(IT)**

(54) **Filtering cartridge for fluid filtering systems, in particular gaseous fluid filtering systems.**

(57) The filtering cartridge structure comprises a filtering septum formed by a thin central filtering member (4) including three layers glued one to another by lamination, the intermediate layer (17) thereof consists of two microfibres bound by a binding material, the other two layers (18, 19) being formed by polyester resin fibres, sealed or welded one to another by hot calendering. The mouth (2) and bottom portions (1) portions are coupled to one another by means of a coupling (13) or fixing member and the bottom portion is devoid of any counterdrawn portions in order to prevent condensate from accumulating. Two filtering septum supporting walls (8, 9) are located concentrically with respect to the two sides of the filtering septum and are formed by means of a simple sealing or welding operation, without using further fixing means.

Fig. 1.

EP 0 063 202 A1

COMPLETE DOCUMENT

Croydon Printing Company Ltd.

## BACKGROUND OF THE INVENTION

The present invention relates to the filtering cartridges for fluid filtering systems, in particular for filtering air or other gases, of the type in which two supporting permeable walls are located one within the other with a filtering septum located in the space therebetween.

These filtering cartridges, in the use condition thereof, are inserted into casing therethrough the gas to be filtered is caused to flow, and the known cartridges being affected by great drawbacks. Firstly the surface thereof originally contacting the fluid or gas to be filtered tends to clog very quickly and, after a comparatively short period of time, because of said clogging, a high pressure differential originates therein which may cause the end covers to detach, which covers are conventionally bound to the cartridge walls by means of suitable adhesive or cementing materials.

Yet another drawback of these known filtering cartridges is that the filtering septum, which is usually formed by fibre layers, generally of syntehtic or inorganic type and loosely arranged in such a way as to form the so-called "felts", without using any binding material, may originate the so-called "breaking" or "grinding" susceptible to hinder the filtering action of the filtering septum, in particular as it is desired to obtain a fine filtering of the fluid to be filtered.

Thirdly, the outer supporting wall of the filtering cartridge, in order to facilitate the assemblying of said cartridge, is interrupted and provided with outwardly turned edges which form guides for inserting therein a coupling member or tile: thus, as these edges are brought together for inserting thereinto said coupling member, they can damage the porous sectum and even shear said septum.

Yet another drawback is that the end covers of the filtering cartridge are generally provided with a central drawn portion, formed for providing therein the annular seat for receiving said supporting walls and the interposed filtering septum, which drawn portion can cause condensate to build up or collect, which can contaminate in the time the fluid to be filtered and originate growth zones for bacteria, which is greatly deleterious particularly in the case of sterilized filters.

Accordingly the thereinabove mentioned drawbacks act against a broad range of applications of the presently commercially available filtering cartridges and, moreover, against the duration thereof, thereby these known cartridges are greatly expensive from the use point of view.

## SUMMARY OF THE INVENTION

The present invention sets out to provide an improved filtering cartridge structure, effective to obviate all of the thereinabove mentioned drawbacks, while being construction-wise simple and effective to be easily assembled.

Yet another object of the present invention is to provide such a filtering cartridge structure the end cover thereof are not subjected to detaching because of pressure impacts or manual or mechanical tearing, thereby assuring a greater stability of said filtering cartridge even in the case of an anomalous operation of this latter.

Yet another object of the present invention is to provide a filtering cartridge structure in which the coupling member or tile to the supporting wall is omitted, thereby eliminating any possibilities of damaging the porous septum as the filtering cartridge is assembled.

Yet another object of the present invention is to provide such a filtering cartridge structure which does not present condensate collecting phenomena, thereby preventing the fluid to be filtered from being contaminated.

Yet another object of the present invention is to provide a filtering cartridge structure having an improved tightness with respect to the filter casing therein it will be assembled.

The aforesaid and other objects and advantages of the present invention are achieved by a filtering cartridge for filtering fluids, in particular gaseous fluids, provided with a mouth portion and a bottom portion, characterized in that it comprises a filtering septum formed by a central thin filtering member including three mutually glued layers, the intermediate layer thereof consists of microfibres held together by a binding material and the two outer layers thereof consist of synthetic or the like fibres loosely located and hot sealed together, two continuous septum supporting permeable walls, fixing means for mutually fixing said mouth and bottom portions, said bottom portion being free of counterdrawn portions in such a way as to prevent condensate from accumulating.

Preferably the intermediate layer of said filtering member consists of glass microfibres held together by a binding material in such a way as to form a fiberglass cushion member and the outer layers of said filtering member consist of polyester resin fibres as loosely arranged and hot sealed and then calendered, said three layers being successively firmly glued by lamination.

Thus the filtering member forming material is particularly strong, while being effective to provide a greatly efficient filtering action, at least equal to that of the presently commercially available filtering means.

Preferably the filtering septum comprises two further prefiltering layers, one at each side or said central filtering member.

Advantageously the septum permeable supporting walls are obtained by sealing or welding the facing flaps or edges, in such a way as to not present any interruptions during the assemblying on said filtering septum.

Thus the danger is eliminated of a shearing of said filtering septum during the adjoining of the flaps or edges to apply the conventional coupling or tile member.

Advantageously the fixing means for fixing said mouth and bottom portions consist of a central perforated tubular member or pipe effective to held said two portions together by sealing said tubular member or pipe thereto. Thus the danger is eliminated of the detaching of said end members as a pressure surge occurs as due either to the clogging of said porous septum or to any other outside event, either of mechanical or physical nature.

Advantageously the bottom portion is provided with a central raised flat circular portion effective to fit or house a sealing gasket, the peripheral surface of said bottom portion being also flattened.

Thus the conventional counterdrawn portion is eliminated which would be susceptible to originate a condensate build up which would compromise a good operation of the filtering cartridge.

The fluid to be filtered inlet mouth is advantageously provided with one or more gaskets in order to provide a perfect tightness of the filtering cartridge in its housing or seat.

BRIEF DESCRIPTION OF THE DRAWINGS

The aforesaid and other characteristics of the filtering cartridge structure according to the invention will become more apparent from the following description of a preferred embodiment thereof, given by way

of a non limitative example and illustrated in the accompanying drawing, where:

fig.1 is a perspective partially broken away view illustrating the filtering cartridge structure according to the present invention;

fig.2 is a partial cross-section view of the filtering cartridge structure illustrated in

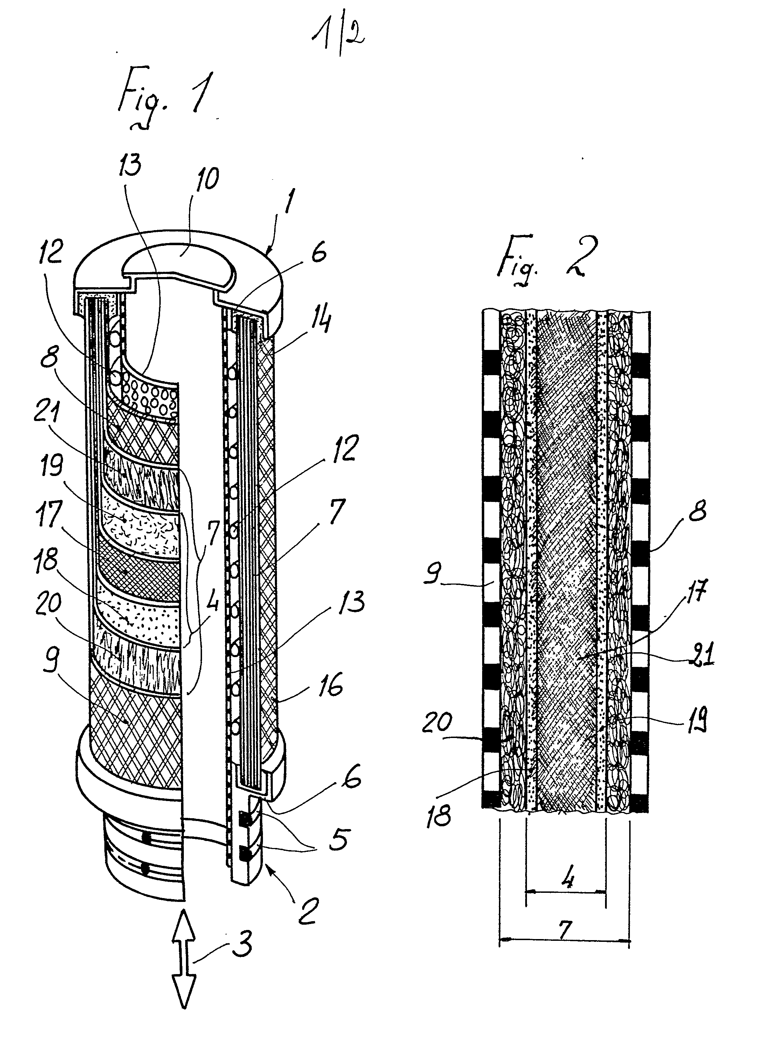

fig.1;and

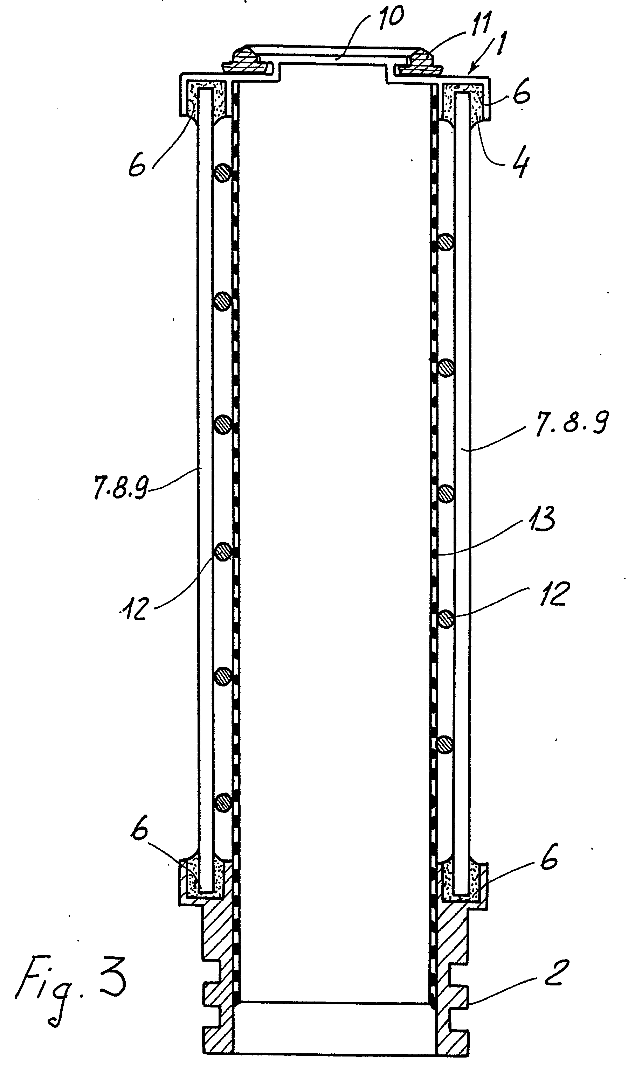

fig.3 is a diametrical cross-section view of the filtering cartridge structure, illustrating the inside supporting tubular member or pipe therefor.

DESCRIPTION OF THE PREFERRED EMBODIMENT

As it is shown, in the figures, the filtering cartridge structure comprises an upper bottom portion 1 and a mouth portion 2.

The lower mouth portion may be provided, if

it is desired, with a thread for fixing the cartridge in its position.

Two sealing annular members 5 on said mouth portion 2 provide a perfect sealing between the inside of the cartridge and the related supplying line.

The bottom portion 1 and mouth portion 2 are each provided with an annular seat 6, effective to house the filtering septum 7 with the related cylindrical metal supporting walls 8 and 9 and to held them by means of an adhesive or cementing material 14.The bottom portion 1 is provided with a central circular ridge 10 provided for housing a sealing gasket 11 (fig.3).In the inside of the inner metal cylindrical wall 8 there is located a coil spring 12 of great pitch,effective to act as a strenghtening means in order to prevent the cartridge from being squashed by the pressure differential,in the case of clogging of the filtering septum.

In the inside of said coil spring 12 there is inserted a perforated tubular member or pipe 13, effective to act as a coupling member between the bottom portion 1 and the mouth portion 2 and to be sealed or welded to these two members.Thus the mouth portion 2 and bottom portion 1 can be coupled mechanically to one another,in a firm way depending on the use conditions,thereby eliminating the danger of a possible detaching thereof as due to pressure surges or other reasons.

The filtering septum is indicated generally at 7 and consists of a filtering member 4 formed by three layers of fine filtering material,indicated at 17,18 and 19 and by two further prefiltering layers 20,21, these latter being inserted between the two cylindrical metal supporting walls 8 and 9 which are provided, through the overall surface thereof, with suitably shaped opening 16, effective to allow for the fluid to be filtered to pass therethrough, without any obstruction.

More specifically, the intermediate layer 17 of the filtering member 4 consists of glass microfibres, bound to one another by a suitable binding material, the outer layers 18 and 19 being formed by polyester resin or the like fibres as loosely oriented and mutually hot sealed by calendering.

Said two outer layers are then glued by lamination to the intermediate layer 17 in such a way as to form a heterogeneous filtering member 4 provided with a remarkable mechanical strenght. Said heterogeneous member 4 can consist of a single coil or of multiple coils as wrapped one on the top of the other. The layers 17,18 and 19 form the fine filtering portion, while the prefiltering layers 20 and 21 form the coarse filtering portion and are effective to enhance the filtering efficiency. Moreover, owing to the described filtering septum structure, it is possible to operate the filtering cartridge in the two operation modes, that is with air admitted through the mouth portion 2 and exiting the outer metal supporting wall 9 or in the reverse, as it is illustrated by the double-head arrow 3. Said metal outer supporting wall 9 is obtained by welding thereby, any interruptions being absent as the filtering septum is assembled, also absent is the danger of possible shearings or breakings of said septum during the assemblying stage.

Obviously it should be noted that the embodiment thereinabove described and illustrated does not involve any limitations on the invention, since those skilled in the art will be able of bringing about all of variations and modifications falling within the scope of the present invention.

In particular the means for fixing the mouth portion 2 and bottom portion 1 can be different from those which have been illustrated and, for example, they can consist of bayonet coupling means or the like, and the filtering septum supporting walls can be formed from any materials suitable for the application for which the filtering cartridge is designed. Moreover, the bottom portion 1 can be differently designed, without departing from the spirit of the present invention.

0063202

## C L A I M S

1- A filtering cartridge for filtering fluids, in particular gaseous fluids, provided with a mouth portion and a bottom portion, characterized in that it comprises a filtering septum formed by a central thin filtering member including three mutually glued layers, the intermediate layer thereof consists of microfibres held together by a binding material and the two outer layers thereof consist of synthetic or the like fibres loosely located and hot sealed together, two continuous septum supporting permeable walls, fixing means for mutually fixing said mouth and bottom portions, said bottom portion being free of counterdrawn portions in such a way as to prevent condensate from accumulating.

2- A filtering cartridge according to claim 1, characterized in that the intermediate layer of said filtering member consists of glass microfibres, held together by a binding material in such a way as to form a fiberglass cushion member and in that said outer layers of said filtering member consist of polyester resin fibres as loosely arranged and hot sealed and then calandered, said three layers being successively firmly glued by lamination.

0063202

3- A filtering cartridge according to claims 1 and 2, characterized in that said filtering septum comprises two further prefiltering layers, one at each side of said central filtering member.

4- A filtering cartridge according to claim 1, characterized in that said septum supporting permeable walls are formed by sealing or welding the facing flaps in such a way as to be continuous during the assemblying on said filtering septum.

5- A filtering cartridge according to the preceding claims, characterized in that said mouth and bottom portion fixing means consist of a perforated central tubular member effective to held said two members together by sealing or welding said tubular member thereto.

6- A filtering cartridge according to the preceding claims, characterized in that said bottom portion is provided with a central rised flat circular portion effective to fit a sealing gasket, the peripheral surface of said bottom portion being also flattened.

7- A filtering cartridge according to the preceding claims, characterized in that the fluid to be filtered inlet mouth is provided with one or more sealing gaskets.

8- A filtering cartridge according to the preceding claims and substantially as described and shown in the accompanying drawings.

1/2

Fig. 1

Fig. 2

Fig. 3

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A-2 017 530 (D.G.KRONSBEIN) <br><br> *Figures 1,2; page 2, line 52 to page 3, line 61* <br><br> --- | 1,2,3, 7 | B 01 D 46/24 <br> B 01 D 27/00 |
| A | GB-A-1 345 155 (D.HUNTER) <br><br> ----- | | |

| | TECHNICAL FIELDS SEARCHED (Int. Cl. ³) |
|---|---|
| | B 01 D 46/00 <br> B 01 D 27/00 |

The present search report has been drawn up for all claims

| Place of search | Date of completion of the search | Examiner |
|---|---|---|
| THE HAGUE | 23-07-1982 | BOGAERTS M.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82